# EUROPEAN PATENT APPLICATION

(11) **EP 4 685 760 A1**
(43) Date of publication of application: **28.01.2026**
(21) Application number: 25172720.2
(22) Date of filing: 25.04.2025
(51) Int. Cl.: G07C 5/08, G07C 5/00

(54) **CONTROL ARCHITECTURE FOR VEHICLE EVENT RECORDERS**

(30) Priority: 26.07.2024 US 202418785505
(71) Applicant: Lytx, Inc., San Diego, CA 92121 (US)
(72) Inventor: NABERHUIS, Brian, San Diego (US); RICE, Christopher Scott, El Cajon (US); OLIVIER, Joseph, San Diego (US); SULTAN, Amir, Winnipeg (CA); LAMBERT, Daniel, Carlsbad (US)
(74) Representative: McKinnon, Alistair James

(57) **Abstract**

A system comprises an interface and a processor. The interface is configured to receive location data of a vehicle event recorder. The processor is configured to determine a geofence state based at least in part on the location data and geofence data associated with a geographic area in which the location data indicates the vehicle event recorder is located; determine a privacy configuration based at least in part on the geofence state; and modify functionality of the vehicle event recorder based at least in part on the privacy configuration.

## Description

### BACKGROUND OF THE INVENTION

Modern vehicles (e.g., airplanes, boats, trains, cars, trucks, etc.) can include a vehicle event recorder in order to support driver safety, operational safety, and operational productivity. A vehicle event recorder typically includes a set of sensors - for example, video recorders, audio recorders, accelerometers, gyroscopes, vehicle state sensors, global positioning system (GPS), etc., that report data, which is used to determine the occurrence of incidents such as high-risk events, process inefficiencies, driver compliance, or anomalous events (e.g., distractions, hard braking, lane change, pedestrians, rain, accidents, risky maneuvers, unexpected locations, proximity risks, vehicle malfunctions, improper driver behavior, etc.). Incidents can be determined on the vehicle through the assistance of machine learning models. Sensor data can also be transmitted to an external reviewing system. However, there are situations (e.g., within certain areas, within certain times, within certain jurisdictions, etc.) in which a vehicle event recorder is prohibited from performing some of its functions (e.g., recording data, analyzing data, storing data, etc.). These functions can include the application of machine learning or artificial intelligence algorithms. This presents a problem in ensuring that the vehicle event recorder does not perform any functions it is prohibited from performing in each situation.

### BRIEF DESCRIPTION OF THE DRAWINGS

Various embodiments of the invention are disclosed in the following detailed description and the accompanying drawings.
Figure 1 is a block diagram illustrating an embodiment of a control architecture for vehicle event recorders.
Figure 2 is a block diagram illustrating an embodiment of a vehicle event recorder.
Figure 3 is a block diagram illustrating an embodiment of a vehicle data server.
Figure 4A is a diagram illustrating an embodiment of a set of geographic areas and associated geofence data.
Figure 4B is a diagram illustrating an embodiment of a set of geographic areas and associated geofence data.
Figure 4C is a diagram illustrating an embodiment of a vehicle event recorder moving to a new geographic area.
Figure 4D is a diagram illustrating an embodiment of a vehicle event recorder moving to a new geographic area.
Figure 5 is a diagram illustrating an example of a graphical user interface displaying logged data associated with a geofence state.
Figure 6 is a flow diagram illustrating an embodiment of a process for control of vehicle event recorders.
Figure 7 is a flow diagram illustrating an embodiment of a process for approximating the location of a vehicle event recorder.
Figure 8 is a flow diagram illustrating an embodiment of a process for updating geofence data stored on a vehicle event recorder in response to the vehicle event recorder moving to a new geographic area.
Figure 9 is a flow diagram illustrating an embodiment of a process for sending geofence data to a vehicle event recorder.
Figure 10 is a flow diagram illustrating an embodiment of a process for displaying data of a control architecture for vehicle event recorders.
Figure 11 is a flow diagram illustrating an embodiment of a process for displaying additional data in response to a user selection.
Figure 12 is a flow diagram illustrating an embodiment of a process for updating geofences and/or privacy rules.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

A control architecture for vehicle event recorders is disclosed. The system comprises an interface and a processor. The interface is configured to receive location data of a vehicle event recorder. The processor is configured to determine a geofence state based at least in part on the location data and geofence data associated with a geographic area in which the location data indicates the vehicle event recorder is located, determine a privacy configuration for the vehicle event recorder based at least in part on the geofence state, and modify functionality of the vehicle event recorder based at least in part on the privacy configuration. The system additionally comprises a memory coupled to the processor and configured to provide the processor with instructions.

In some embodiments, receiving the location data of the vehicle event recorder further comprises approximating the location of the vehicle event recorder in the event of missing or anomalous data. For example, the processor may be configured to receive location data at a fixed frequency. In the event that the processor stops receiving location data, the processor may approximate the location of the vehicle. For example, the vehicle may be approximated to be at all locations within an expanding threshold distance of the most recent location datapoint. In various embodiments, anomalous data are determined based at least in part on one or more of the following: a location datapoint is determined to be above a threshold distance from a previous location datapoint (e.g., the vehicle event recorder exceeds a threshold speed, acceleration, etc.), a location datapoint is determined to be in a different direction from previous location datapoints, or a location datapoint is determined to be recorded in an anomalous situation (e.g., a sensor recording the location data loses track of the vehicle event recorder and indicates to the processor that the data is anomalous).

Geofences may be used to define geographical boundaries impacting the intended functionality of a vehicle event recorder. For example, within a geofence, functionality of the vehicle event recorder (e.g., recording data, analyzing data, storing data, etc.) may be prohibited. Geofences may be relatively easy to analyze (e.g., a geofence corresponding to a rectangular plot of land) or challenging to analyze (e.g., a geofence corresponding to a border of a state or country). A geofence that is relatively challenging to analyze may also be made easier to analyze through various techniques. For example, smoothing the geofence, expanding the geofence, simplifying the geofence, etc. may all improve the ease of analysis of the geofence.

A geographic area may be associated with a set of one or more geofences. For example, the geographic area may be associated with all geofences overlapping the geographic area. In some embodiments, the geographic area comprises a location tile. For example, a state or country may be divided into regular plots of land (e.g., squares, hexagons, etc.), each comprising a location tile. In some embodiments, the geographic area is an arbitrary shape or size. A geographic area in which the vehicle event recorder is located is used to determine the geofence state. In some embodiments, the geofence state is determined based only on the set of geofences associated with the geographic area in which the location data indicates the vehicle event recorder is located.

In some embodiments, new geofence data is received from a server in response to the vehicle event recorder entering a new geographic area. In some embodiments, the geofence data is associated with a geographic area neighboring the new geographic area (e.g., bordering the new geographic area, overlapping the new geographic area, within a threshold distance of the new geographic area, etc.). For example, the vehicle event recorder may move to a new geographic area and receive geofence data associated with the new geographic area. The vehicle event recorder may also receive geofence data associated with a geographic area neighboring the new geographic area. In some embodiments, the vehicle event recorder removes a portion of geofence data associated with a geographic area that is not neighboring the new geographic area. For example, the vehicle event recorder may have stored geofence data associated with a geographic area that neighbors the old geographic area but does not neighbor the new geographic area. The stored geofence data may be removed in response to the vehicle event recorder moving to the new geographic area. The stored geofence data may be associated with a period of time or a regular schedule of being active or not active.

Location data of the vehicle event recorder are used in conjunction with geographic areas and associated geofences to determine a geofence state. Determining of a subset of relevant geofences may improve the ease of determining the geofence state. For example, the location data may indicate the vehicle event recorder is in a specific geographic area associated with a subset of all geofences. In various embodiments, the geofence state includes whether the vehicle event recorder is located inside or outside of a geofence in the subset of geofences, a position of the vehicle event recorder relative to the geofence, a last timestamp of when the vehicle event recorder was located inside the geofence, or any other appropriate data.

The privacy configuration is determined based at least in part on the geofence state and indicates which functionality of the vehicle event recorder should be modified. In some embodiments, the geofence data of the geofence state are associated with a period of time. For example, a geofence may be relevant only during the workday and does not influence the privacy configuration at other periods of time. In some embodiments, other factors associated with the geofence data (e.g., a status of a driver of the vehicle associated with the vehicle event recorder, a status of the vehicle, a command from a vehicle data server, etc.) may be considered when determining the geofence state or the privacy configuration. For example, a geofence may only be considered when determining the privacy configuration in the event that a driver has clocked in for work that day.

In some embodiments, the privacy configuration comprises a set of one or more privacy rules associated with the geofence data. In some embodiments, a set of one or more privacy rules is associated with a period of time. In some such embodiments, a privacy rule of the set of one or more privacy rules associates the geofence state with a modification to the functionality of the vehicle event recorder. For example, a first privacy rule may associate states in which the vehicle event recorder is within a first geofence with disabling a machine learning model for determining driver distractedness. A second privacy rule may associate states in which the vehicle event recorder is within a second geofence with disabling an experimental machine learning model undergoing testing. In various embodiments, determining the privacy configuration comprises applying a most restrictive combination of applicable privacy rules, a least restrictive combination of applicable privacy rules, or any other appropriate combination of privacy rules (e.g., a rule associated with a smallest geofence). For example, in the event that the vehicle event recorder is within both the first and second geofences, applying a most restrictive combination of applicable privacy rules would disable both the machine learning model for driver distractedness and the experimental machine learning model. In various embodiments, rules may have priorities associated with them such that higher priority rules will be applied over lower priority rules. In some embodiments, the applied rule is the sum of all the highest priority rules that are active, either due to time, locality with respect to geofences, any other appropriate control signal, or any other appropriate combination of criteria.

In various embodiments, modifying the functionality of the vehicle event recorder comprises restricting recording of vehicle event recorder data, restricting analysis of vehicle event recorder data, restricting storage of vehicle event recorder data, restricting transmission of vehicle event recorder data, restricting the application of one or more algorithms on vehicle event recorder data (e.g., sensor data, interior camera data, etc.), or any other appropriate restriction. In various embodiments, the vehicle event recorder data comprises video data from inside the vehicle associated with the vehicle event recorder, audio data from inside the vehicle, video data from outside the vehicle, audio data from outside the vehicle, location data, sensor data, driver identification data, or any other appropriate data. In some embodiments, modifications to the functionality of the vehicle event recorder differ between types of data. In some embodiments, modifying the functionality comprises disabling a machine learning model. In various such embodiments, the machine learning model comprises an algorithm for determining driver distractedness, an experimental algorithm undergoing testing, an algorithm for processing data inside of a vehicle, or any other appropriate algorithm.

In various embodiments, the control architecture for vehicle event recorders further comprises logging the geofence state, logging the location data, logging timestamps associated with the location data, logging the privacy configuration, logging the modifications to the functionality of the vehicle event recorder, or logging any other appropriate data. The logged data may be transmitted to a server, stored on the vehicle event recorder, or processed in any other appropriate manner. In some embodiments, the logged data is displayed for a user (e.g., overlayed on a map, illustrated on a graphical user interface, etc.). In various such embodiments, the user is able to view the geographic area used to determine the geofence state, a geofence included in the geofence state, location data of the vehicle event recorder, a location the vehicle event recorder entered the geofence, a location the vehicle event recorder exited the geofence, the privacy configuration (e.g. a privacy rule associated with the geofence), or any other appropriate data. In some embodiments, the modifications to the functionality of the vehicle event recorder include modifications to the data or types of data logged.

In some embodiments, the geofence state is determined using a daemon or microservice. In some embodiments, the privacy configuration is determined using a daemon or microservice. For example, a geofence processor daemon or microservice on the vehicle event recorder may analyze the location data and geofence data to generate the geofence state, while in parallel a privacy manager daemon on the vehicle event recorder may analyze the geofence state to determine a privacy configuration and modify the vehicle event recorder functionality. In various embodiments, daemons or microservices are configured to perform one or more of the following functions: generating a location tile, smoothing of a geofence, simplification of a geofence, expansion of a geofence, transmitting geofence data, receiving geofence data, logging the geofence state, logging the privacy configuration, transmitting data logs, receiving data logs, or any other appropriate function. For example, the control architecture may comprise a tiling microservice on a vehicle data server to generate a location tile and associate it with a set of geofences, a geofence processing microservice on the server to smooth and expand geofences of the set of geofences, a transmission microservice on the server to transmit geofence data to the vehicle event recorder and receive data logs, a transmission daemon on the vehicle event recorder to send the data logs and receive the geofence data, a geofence processor daemon on the vehicle event recorder to determine the geofence state based on the geofence data, a privacy manager daemon on the vehicle event recorder to determine a privacy configuration based on the geofence state, and a logging daemon on the vehicle event recorder to generate the data logs.

The control architecture for vehicle event recorders using microservices improves the computing system by modifying the functionality of vehicle event recorders in response to situations where use of vehicle event recorder data is restricted. In cases where the vehicle event recorder is not allowed to record, analyze, store, transmit or otherwise use various kinds of data, the system automatically prevents the vehicle event recorder from improperly using the data. Further, the system improves the computing system by efficiently storing in limited memory relevant geofence data by including geofence data associated with a geographic area (e.g., a tile) that is considered for privacy states. In addition, neighboring geographic areas are also stored so that as the vehicle moves geofence data is readily available. Upon entering a neighboring geographic area stored geofence data is updated to discard geographic areas that are no longer neighboring the current geographic area and new neighboring geographic areas are loaded into memory (e.g., by requesting geofence data for those areas from a server). In some embodiments, the system also uses memory efficiently by simplifying, in some cases, geofences to make storing the geofence shapes more efficient (e.g., rough boundaries are approximated with smooth surfaces but with a guarantee that the smooth surface always encloses the original geofenced area). In some embodiments, the system improves the computing system by improving fault tolerance to missing position data by estimating position in a worst case way to determine a privacy state (e.g., in response to nearing a geofence border and losing positional data, estimating using a worst case speed the time of crossing the geofence and appropriately changing privacy state based on the estimated worse case speed). In some embodiments, the worst case way to determine a privacy state determines the worst case by considering the possible worst geofence restrictions to conservatively determine the privacy state. In some embodiments, the system improves the computing system by creating an auditable database for storing privacy state or state changes so that compliance can be verified. In some embodiments, the system improves the computing system by employing microservices or daemons to efficiently compute privacy states by separating and/or functionality on a computing platform (e.g., a vehicle event recorder, a vehicle data server, etc.).

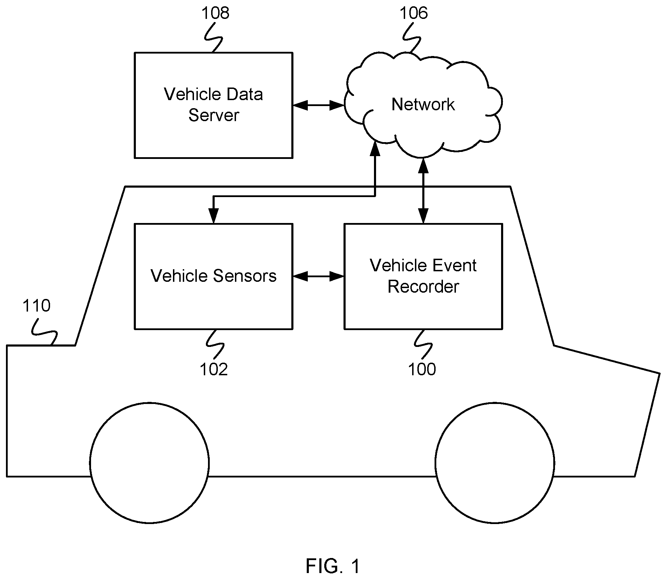

Figure 1 is a block diagram illustrating an embodiment of a control architecture for vehicle event recorders. In the example shown, vehicle event recorder 100 is mounted in vehicle 110 (e.g., a car, truck, commercial vehicle, etc.) and communicates with vehicle data server 108 via network 106. Vehicle event recorder 100 includes or is in communication with a set of sensors - for example, video recorders, audio recorders, accelerometers, gyroscopes, vehicle state sensors, proximity sensors, a global positioning system (GPS), outdoor temperature sensors, moisture sensors, indoor monitoring systems, forward-facing cameras, or any other appropriate sensors. In the example shown, vehicle event recorder 100 includes a set of sensors and is also in communication with vehicle sensors 102. In various embodiments, vehicle sensors 102 comprise a speedometer, an accelerator pedal sensor, a brake pedal sensor, an engine revolutions per minute (RPM) sensor, an engine temperature sensor, a headlight sensor, an airbag deployment sensor, driver and passenger seat weight sensors, an anti-locking brake sensor, traction control system sensors, drive wheel speed sensors, an engine exhaust sensor, a gear position sensor, a cabin equipment operation sensor, or any other appropriate vehicle sensors. In various embodiments, vehicle event recorder 100 is mounted on vehicle 110 in one of the following locations: the chassis, the front grill, the dashboard, the rear-view mirror, or any other appropriate location. In some embodiments, vehicle event recorder 100 comprises multiple units mounted in different locations in vehicle 110. In some embodiments, vehicle event recorder 100 records data from its associated sensors. In some embodiments, vehicle event recorder 100 processes the recorded data using a machine learning model. In various such embodiments, the machine learning model comprises an algorithm for determining driver distractedness, an experimental algorithm undergoing testing, an algorithm for processing data collected inside of a vehicle, or any other appropriate algorithm.

In some embodiments, Vehicle event recorder 100 comprises a communications system for communicating with network 106. In various embodiments, network 106 comprises a wireless network, a wired network, a cellular network, a Code Division Multiple Access (CDMA) network, a Global System for Mobile Communication (GSM) network, a Long-Term Evolution (LTE) network, a Universal Mobile Telecommunications System (UMTS) network, a Worldwide Interoperability for Microwave Access (WiMAX) network, a Dedicated Short-Range Communications (DSRC) network, a local area network, a wide area network, the Internet, or any other appropriate network. In some embodiments, network 106 comprises multiple networks, changing over time and location. In some embodiments, different networks comprising network 106 comprise different bandwidth cost (e.g., a wired network has a very low cost, a wireless Ethernet connection has a moderate cost, a cellular data network has a high cost, etc.). In some embodiments, network 106 has a different cost at different times (e.g., a higher cost during the day and a lower cost at night). Vehicle data server 108 comprises a vehicle data server in communication with vehicle event recorder 100. In some embodiments, vehicle data server 108 is located at a home station (e.g., a shipping company office, a taxi dispatcher, a truck depot, etc.). In various embodiments, vehicle data server 108 is located at a colocation center (e.g., a center where equipment, space, and bandwidth are available for rental), at a cloud service provider, or at any other appropriate location. In some embodiments, data recorded by vehicle event recorder 100 is downloaded to vehicle data server 108 when vehicle 110 arrives at the home station. In some embodiments, vehicle data server 108 is located at a remote location. In some embodiments, data recorded by vehicle event recorder 100 is downloaded to vehicle data server 108 wirelessly. In some embodiments, a subset of data recorded by vehicle event recorder 100 is downloaded to vehicle data server 108 wirelessly. In some embodiments, vehicle data server 108 comprises a system for analyzing vehicle event recorder data. In some such embodiments, vehicle event recorder data is analyzed at least in part using a machine learning model. In some embodiments, vehicle event recorder data comprises logs generated by the control architecture for vehicle event recorders. In various such embodiments, logs comprise a geofence state, location data of vehicle event recorder 100, a timestamp associated with the location data, a privacy configuration, or a modification to the functionality of vehicle event recorder 100. In some embodiments, vehicle event recorder data is displayed for a user (e.g., on a map, graphical user interface, etc.).

In some embodiments, a processor of vehicle event recorder 100 receives a location data (e.g., from a GPS system) via an interface. The processor is configured to determine a geofence state based at least in part on the location data and geofence data associated with a geographic area in which the location data indicates the vehicle event recorder is located; determine a privacy configuration based at least in part on the geofence state; and modify functionality of the vehicle event recorder based at least in part on the privacy configuration.

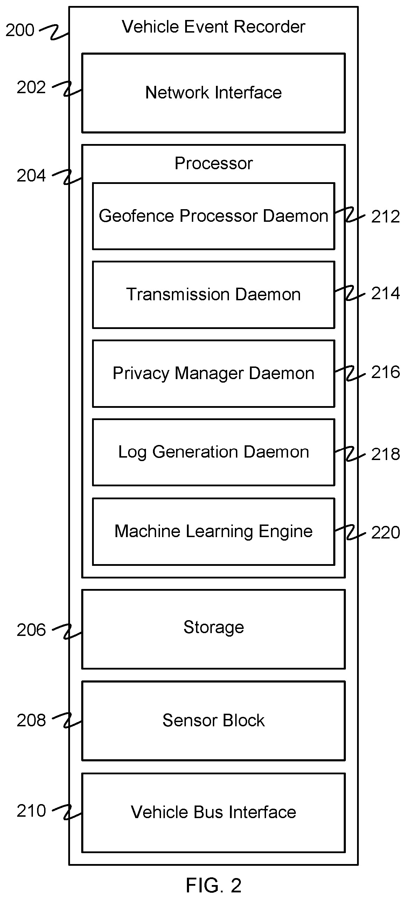

Figure 2 is a block diagram illustrating an embodiment of a vehicle event recorder. In some embodiments, vehicle event recorder 200 of Figure 2 comprises vehicle event recorder 100 of Figure 1. In the example shown, vehicle event recorder 200 comprises processor 204. Processor 204 comprises a processor for controlling the operations of vehicle event recorder 200, for reading and writing information on storage 206, for communicating via network interface 202 (e.g., communicating to a vehicle data server via a cell network and/or a WiFi network), for reading data via sensor block 208, and for communicating via vehicle bus interface 210 (e.g., receiving sensor data from vehicle sensors). In various embodiments, processor 204 comprises a processor for interpreting sensor data, implementing machine learning models, determining a geofence state, determining a privacy configuration, modifying vehicle event recorder functionality, logging data, transmitting data, receiving data, or any other appropriate purpose. In the example shown, processor 204 comprises geofence processor daemon 212, transmission daemon 214, privacy manager daemon 216, log generation daemon 218, and machine learning engine 220.

Geofence processor daemon 212 determines a geofence state based at least in part on location data of vehicle event recorder 200 (e.g., received from sensor block 208 or vehicle bus interface 210) and geofence data associated with a geographic area in which the location data indicates vehicle event recorder 200 is located. In some embodiments, geofence processor daemon 212 also receives new geofence data from a server in response to the vehicle event recorder moving to a new geographic area. In various such embodiments, the new geofence data is received via transmission daemon 214, received via network interface 202, stored in storage 206, accessed by geofence processor daemon 212, or processed using any other appropriate method. Privacy manager daemon 216 determines a privacy configuration based at least in part on the geofence state determined by geofence processor daemon 212. In some embodiments, the privacy configuration comprises a set of one or more privacy rules. In various such embodiments, the privacy configuration may comprise a most restrictive combination of privacy rules, a least restrictive combination of privacy rules, or any other appropriate combination of privacy rules. The functionality of vehicle event recorder 200 is modified based at least in part on the privacy configuration. In some embodiments, the functionality is modified by privacy manager daemon 216 in response to the determination of the privacy configuration. Log generation daemon 218 logs the geofence state, the location data, a timestamp associated with the location data, a privacy configuration, the modifications to the functionality of vehicle event recorder 200, or any other appropriate data. In various embodiments, logs are transmitted via network interface 202 (e.g., to the vehicle data server), transmitted by transmission daemon 214, transmitted by log generation daemon 218, stored via storage 206, analyzed further by processor 204, displayed graphically to a user (e.g., a user communicating with a vehicle data server), or processed in any other appropriate manner.

Storage 206 comprises a data storage (e.g., a random access memory (RAM), a read only memory (ROM), a nonvolatile memory, a flash memory, a hard disk, or any other appropriate data storage). In various embodiments, storage 206 comprises a data storage for storing instructions for processor 204, vehicle event recorder data, vehicle event data, sensor data, video data, machine learning model algorithm data, or any other appropriate data. In various embodiments, network interface 202 comprises one or more of a GSM interface, a CDMA interface, a LTE interface, a UMTS interface, a WiMAX interface, a DSRC interface, a WiFi^{™} interface, an Ethernet interface, a Universal Serial Bus (USB) interface, a Bluetooth^{™} interface, an Internet interface, or any other appropriate interface. Sensor block 208 comprises an interface to one or more vehicle event recorder sensors. In various embodiments, vehicle event recorder sensors comprise an exterior video camera, an exterior still camera, an interior video camera, an interior still camera, a microphone, an accelerometer, a gyroscope, an outdoor temperature sensor, a moisture sensor, a laser line tracker sensor, vehicle state sensors, or any other appropriate sensors. In various embodiments, vehicle state sensors comprise a speedometer, an accelerator pedal sensor, a brake pedal sensor, an engine RPM sensor, an engine temperature sensor, a headlight sensor, an airbag deployment sensor, driver and passenger seat weight sensors, an antilocking brake sensor, shocks sensors, an engine exhaust sensor, a gear position sensor, a turn signal sensor, a cabin equipment operation sensor, or any other appropriate vehicle state sensors. Vehicle bus interface 210 comprises an interface to sensors of the vehicle associated with vehicle event recorder 200. In various embodiments, the sensors comprise integrated cameras, accelerometers, GPS, vehicle state sensors, or any other appropriate sensors. In some embodiments, vehicle bus interface 210 communicates with an on-board diagnostics (OBD) bus (e.g., society of automotive engineers (SAE) J1939, J1708/J1587, OBD-II, CAN BUS, etc.). In some embodiments, vehicle event recorder 200 communicates with vehicle state sensors via the OBD bus. In some embodiments, vehicle event recorder 200 communicates with a vehicle data server via network interface 202. In various embodiments, vehicle event recorder 200 transmits logged data (e.g., a geofence state, a privacy configuration, a functionality modification, etc.), machine learning algorithm data, vehicle event recorder sensor data, vehicle bus sensor data, accelerometer data, speed data, maneuver data, audio data, video data, event data, or any other appropriate data to a vehicle data server. In various embodiments, vehicle event recorder 200 receives upload requests, logs, machine learning algorithm data, vehicle event recorder sensor data, vehicle bus sensor data, accelerometer data, speed data, maneuver data, audio data, video data, event data, or any other appropriate data from a vehicle data server.

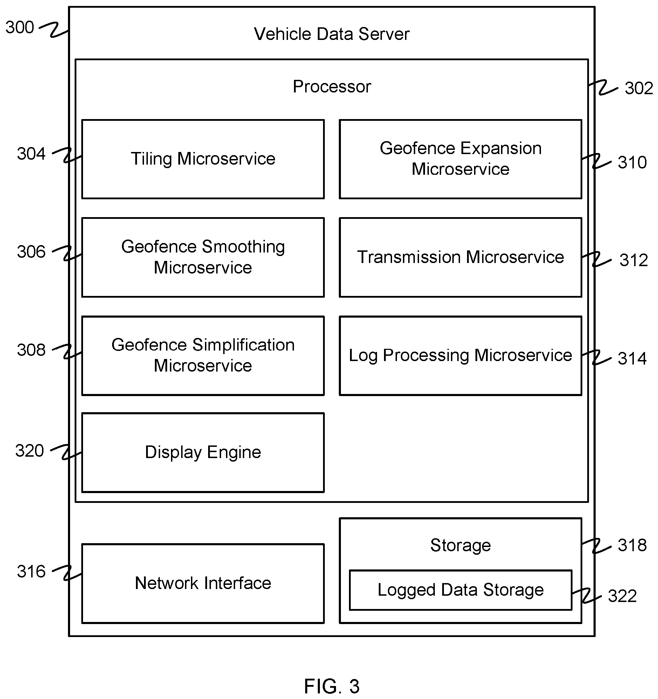

Figure 3 is a block diagram illustrating an embodiment of a vehicle data server. In some embodiments, vehicle data server 300 comprises vehicle data server 108 of Figure 1. In the example shown, vehicle data server 300 comprises processor 302. In various embodiments, processor 302 comprises a processor for receiving requests for geofence data, smoothing geofence data, simplifying geofence data, expanding geofence data, sending geofence data to a vehicle event recorder, generating location tiles, processing logged data, running a machine learning algorithm, processing machine learning algorithm data, detecting characteristics or events using vehicle data, communicating via network interface 316, reading and writing information from storage 318, or for any other appropriate purpose. Storage 318 comprises a data storage (e.g., a random access memory (RAM), a read only memory (ROM), a nonvolatile memory, a flash memory, a hard disk, or any other appropriate data storage). In various embodiments, storage 318 comprises a data storage for storing instructions for processor 302, vehicle event recorder data, vehicle event data, sensor data, video data, map data, machine learning algorithm data, or any other appropriate data. In the example shown, storage 318 comprises logged data storage 322. In various embodiments, network interface 316 comprises one or more of a GSM interface, a CDMA interface, a LTE interface, a UMTS interface, a WiMAX interface, a DSRC interface, a WiFi^{™} interface, an Ethernet interface, USB interface, a Bluetooth^{™} interface, an Internet interface, a fiber optic interface, or any other appropriate interface. In various embodiments, vehicle data server 300 receives logged data (e.g., a geofence state, a privacy configuration, a functionality modification, etc.), machine learning algorithm data, vehicle event recorder sensor data, vehicle bus sensor data, accelerometer data, speed data, maneuver data, audio data, video data, event data, or any other appropriate information from one or more vehicle event recorders.

In the example shown, processor 302 includes tiling microservice 304. In various embodiments, tiling microservice 304 generates a geographic area, associates the geographic area with a geofence, determines a set of geographic areas neighboring the geographic area, or performs any other appropriate function. In some embodiments, a geographic area comprises a location tile. For example, tiling microservice 304 may generate a grid of square location tiles covering a larger region of interest (e.g., a country), associate each tile with a set of zero or more geofences, and determine a set of tiles neighboring each tile.

In the example shown, processor 302 includes geofence smoothing microservice 306. In various embodiments, geofence smoothing microservice 306 retrieves a geofence (e.g., from storage 318), modifies the shape of the geofence, determines the complexity of the geofence (e.g., estimates level of detail of the geofence, size in memory of the geofence, speed to analyze the geofence, etc.), or performs any other appropriate function. For example, the geofence may be defined by a set of vertices and geofence smoothing microservice 306 may update the locations of a subset of the vertices based on any appropriate criteria (e.g., a vertex in a concave section of the geofence may be moved to make the geofence entirely convex).

In the example shown, processor 302 includes geofence simplification microservice 308. In various embodiments, geofence simplification microservice 308 retrieves a geofence (e.g., from storage 318), modifies the shape of the geofence, determines the complexity of the geofence (e.g., estimates level of detail of the geofence, size in memory of the geofence, speed to analyze the geofence, etc.), decreases the complexity of the geofence, or performs any other appropriate function. For example, the geofence may be defined by a set of vertices and geofence smoothing microservice 306 may remove vertices from the set based on any appropriate criteria (e.g., removing a vertex would not change the area of the geofence by more than a threshold difference.).

In the example shown, processor 302 includes geofence expansion microservice 310. In various embodiments, geofence expansion microservice 310 retrieves a geofence (e.g., from storage 318), modifies the shape of the geofence, determines the complexity of the geofence (e.g., estimates level of detail of the geofence, size in memory of the geofence, speed to analyze the geofence, etc.), compares a smoothed or simplified geofence to an original geofence, or performs any other appropriate function. For example, the geofence may be uniformly increased in scale based on any appropriate criteria (e.g., until it covers the entirety of the original geofence.).

In the example shown, processor 302 includes transmission microservice 312. In various embodiments, transmission microservice 312 sends or receives logged data (e.g., a geofence state, a privacy configuration, a functionality modification, etc.), machine learning algorithm data, vehicle event recorder sensor data, vehicle bus sensor data, accelerometer data, speed data, maneuver data, audio data, video data, event data, or any other appropriate data. In some embodiments, transmission microservice 312 sends or receives data via network interface 316.

In the example shown, processor 302 includes log processing microservice 314. In various embodiments, log processing microservice 314 receives logged data (e.g., a geofence state, a privacy configuration, a functionality modification, etc.), machine learning algorithm data, vehicle event recorder sensor data, vehicle bus sensor data, accelerometer data, speed data, maneuver data, audio data, video data, event data, map data, or any other appropriate data. In various embodiments, log processing microservice 314 stores data (e.g., in logged data storage 322), analyzes data, transmits data to a user (e.g., via network interface 316), displays data to the user, or processes data using any other appropriate method.

In the example shown, processor 302 includes display engine 320. Display engine 320 generates a display for a user to view data, analyze data, modify data, etc. In various embodiments, the display generated by display engine 320 displays logged data, geofence data, geographic area data, map data, weather data, or any other appropriate data. For example, the display may be a map of a geographic area and comprise a first geofence associated with a privacy rule, a second geofence relating to weather conditions in the geographic area, and locations where a vehicle event recorder entered or exited the first geofence and the second geofence. In various embodiments, display engine 320 overlays the data onto a map, illustrates the data on a graphical user interface, or generates any other appropriate display. In some embodiments, the user is able to request a subset of available data (e.g., associated with a geographic area, a geofence, a vehicle event recorder, etc.) from the display. For example, in response to the user selecting a vehicle event recorder on the display, display engine 320 may provide a geofence state of the vehicle event recorder, a geographic area used to determine the geofence state of the vehicle event recorder, a set of geofences included in the geofence state, location data of the vehicle event recorder, a set of locations where the vehicle event recorder entered a geofence, a set of locations where the vehicle event recorder exited the geofence, a privacy configuration of the vehicle event recorder, or any other appropriate data. In some embodiments, the user is able to modify the control architecture for vehicle event recorders using the display. For example, the user may modify the functionality of a selected vehicle event recorder, modify a privacy rule associated with a selected geofence, or modify the control architecture in any other appropriate way.

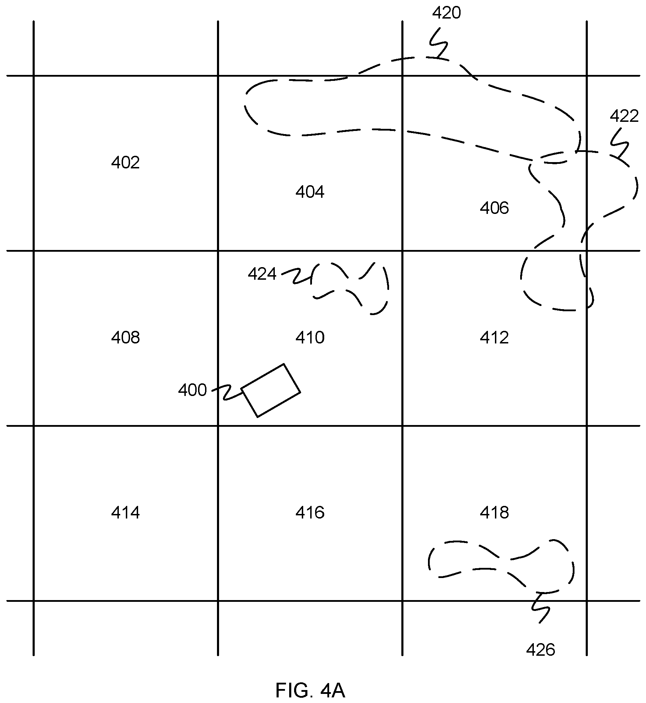

Figure 4A is a diagram illustrating an embodiment of a set of geographic areas and associated geofence data. In the example shown, geographic area 402, geographic area 404, geographic area 406, geographic area 408, geographic area 410, geographic area 412, geographic area 414, geographic area 416, and geographic area 418 comprise a grid of square location tiles. In various embodiments, geographic areas comprise location tiles of another regular shape (e.g., a hexagonal grid), areas of irregular shape and size, or any other appropriate areas. In some embodiments, geographic areas sharing an edge are considered neighboring. For example, geographic area 410 may neighbor geographic area 404, geographic area 408, geographic area 412, and geographic area 416. In some embodiments, geographic areas sharing a vertex and/or a side are considered neighboring. For example, geographic area 410 may neighbor geographic area 402, geographic area 404, geographic area 406, geographic area 408, geographic area 412, geographic area 414, geographic area 416, and geographic area 418.

Vehicle event recorder 400 is located in geographic area 410. Geofence 420, geofence 422, geofence 424, and geofence 426 comprise geofences of arbitrary shape and size. Geofence 420 and geofence 422 also overlap within geographic area 406. In some embodiments, a geofence is associated with geographic areas that contain at least a portion of the geofence. For example, in the embodiment shown, geofence 420 is associated with geographic area 404 and geographic area 406, geofence 422 is associated with geographic area 406 and geographic area 412, geofence 424 is associated with geographic area 410, and geofence 426 is associated with geographic area 418.

The control architecture for vehicle event recorders determines a geofence state based at least in part on location data of a vehicle event recorder and geofence data associated with a geographic area where the location data indicates the vehicle event recorder is located. In the example shown, the vehicle event recorder is located in geographic area 410 and a geofence state is determined based on geofence 424. In some embodiments, geofence 424 is stored locally on vehicle event recorder 400 (e.g., in storage 206 of Figure 2). In some embodiments, other geofences are stored locally on vehicle event recorder 400. For example, geofences associated with neighboring geographic areas (e.g., geofence 420, associated with geographic area 404, and geofence 422, associated with geographic area 412) may be stored locally on vehicle event recorder 400. In some embodiments, the geofence state is determined based in part on the other geofences.

The control architecture for vehicle event recorders determines a privacy configuration based at least in part on the geofence state. In some embodiments, the privacy configuration comprises a set of one or more privacy rules associated with the geofence data. In some such embodiments, a privacy rule associates the geofence state with a modification of functionality of a vehicle event recorder. For example, a first privacy rule may associate geofences states in which a vehicle event recorder is within geofence 420 with disabling a machine learning model (e.g., a machine learning model for determining driver distractedness, for testing an experimental algorithm, for processing data collected inside the vehicle, etc.). A second privacy rule may associate geofence states in which the vehicle event recorder is within geofence 422 with disabling an experimental machine learning model undergoing testing. In some such embodiments, determining a privacy configuration comprises applying a combination of applicable privacy rules. In various embodiments, the combination of applicable privacy rules is a most restrictive combination, a least restrictive combination, or any other appropriate combination. For example, in response to vehicle event recorder 400 moving into the portion of location tile 406 where geofence 420 overlaps geofence 422, a most restrictive combination of privacy rules may comprise the first privacy rule and the second privacy rule. Another combination of privacy rules may comprise only the first privacy rule (e.g., the first privacy rule may be given priority over the second privacy rule).

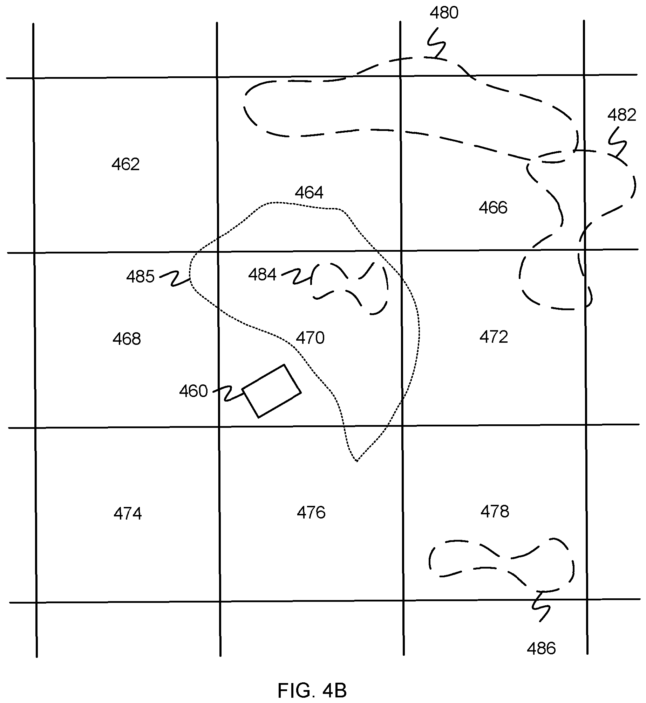

Figure 4B is a diagram illustrating an embodiment of a set of geographic areas and associated geofence data. In the example shown, geographic area 462, geographic area 464, geographic area 466, geographic area 468, geographic area 470, geographic area 472, geographic area 474, geographic area 476, and geographic area 478 comprise a grid of square location tiles. In various embodiments, geographic areas comprise location tiles of another regular shape (e.g., a hexagonal grid), areas of irregular shape and size, or any other appropriate areas. In some embodiments, geographic areas sharing an edge are considered neighboring. For example, geographic area 470 may neighbor geographic area 464, geographic area 468, geographic area 472, and geographic area 476. In some embodiments, geographic areas sharing a vertex and/or a side are considered neighboring. For example, geographic area 470 may neighbor geographic area 462, geographic area 464, geographic area 466, geographic area 468, geographic area 472, geographic area 474, geographic area 476, and geographic area 478.

Vehicle event recorder 460 is located in geographic area 470. Geofence 480, geofence 482, geofence 484, geofence 485, and geofence 486 comprise geofences of arbitrary shape and size. Geofence 480 and geofence 482 also overlap within geographic area 486. In some embodiments, a geofence is associated with geographic areas that contain at least a portion of the geofence. For example, in the embodiment shown, geofence 480 is associated with geographic area 464 and geographic area 466, geofence 482 is associated with geographic area 466 and geographic area 472, geofence 484 is associated with geographic area 470, geofence 485 is associated with geographic area 462, geographic area 464, geographic area 468, geographic area 470, geographic area 472, and geographic area 476, and geofence 486 is associated with geographic area 478.

The control architecture for vehicle event recorders determines a geofence state based at least in part on location data of a vehicle event recorder and geofence data associated with a geographic area where the location data indicates the vehicle event recorder is located. In the example shown, the vehicle event recorder is located in geographic area 470 and a geofence state is determined based on geofence 484. In some embodiments, geofence 484 is stored locally on vehicle event recorder 460 (e.g., in storage 206 of Figure 2). In some embodiments, other geofences are stored locally on vehicle event recorder 460. For example, geofences associated with neighboring geographic areas (e.g., geofence 480, associated with geographic area 464, and geofence 482, associated with geographic area 472) may be stored locally on vehicle event recorder 460. In some embodiments, the geofence state is determined based in part on the other geofences.

The control architecture for vehicle event recorders determines a privacy configuration based at least in part on the geofence state. In some embodiments, the privacy configuration comprises a set of one or more privacy rules associated with the geofence data. In some such embodiments, a privacy rule associates the geofence state with a modification of functionality of a vehicle event recorder. For example, a first privacy rule may associate geofences states in which a vehicle event recorder is within geofence 480 with disabling a machine learning model (e.g., a machine learning model for determining driver distractedness, for testing an experimental algorithm, for processing data collected inside the vehicle, etc.). A second privacy rule may associate geofence states in which the vehicle event recorder is within geofence 482 with disabling an experimental machine learning model undergoing testing. In some such embodiments, determining a privacy configuration comprises applying a combination of applicable privacy rules. In various embodiments, the combination of applicable privacy rules is a most restrictive combination, a least restrictive combination, or any other appropriate combination. For example, in response to vehicle event recorder 460 moving into the portion of location tile 466 where geofence 480 overlaps geofence 482, a most restrictive combination of privacy rules may comprise the first privacy rule and the second privacy rule. Another combination of privacy rules may comprise only the first privacy rule (e.g., the first privacy rule may be given priority over the second privacy rule).

In the example shown, geofence 484 is inside geofence 485. In some embodiments, geofence 485 is a larger fence with associated privacy rules that have a relatively low priority and geofence 484 is a smaller fence with associated privacy rules that have a relatively high priority. The larger fence, geofence 485, should have a more restrictive ruleset, say, external recording is disabled in the larger fence. The privacy rules associated with geofence 484 allow for external recording, and since the vehicle is in both fences and the privacy rules associated with geofence 484 have a higher priority, vehicle event recorder 460 enables external video recording for that combination of rules. Upon leaving geofence 484, vehicle event recorder 460 would turn off external recording, as the privacy rules associated with geofence 485 are more restrictive in this regard.

In some embodiments, geofence 485 is a larger fence with associated privacy rules that have a lower priority and geofence 484 is a smaller fence with associated privacy rules that have a higher priority. In the case where the larger fence, geofence 485, has a less restrictive ruleset, say, external recording is enabled in the larger fence. The privacy rules associated with geofence 484 do not allow for external recording, and since vehicle event recorder 460 is in both fences and the rules associated with geofence 484 have a higher priority, the system disables external video recording for that combination of rules. Upon leaving geofence 484, vehicle event recorder 460 would turn on external recording, as allowed by the privacy rules associated with geofence 485.

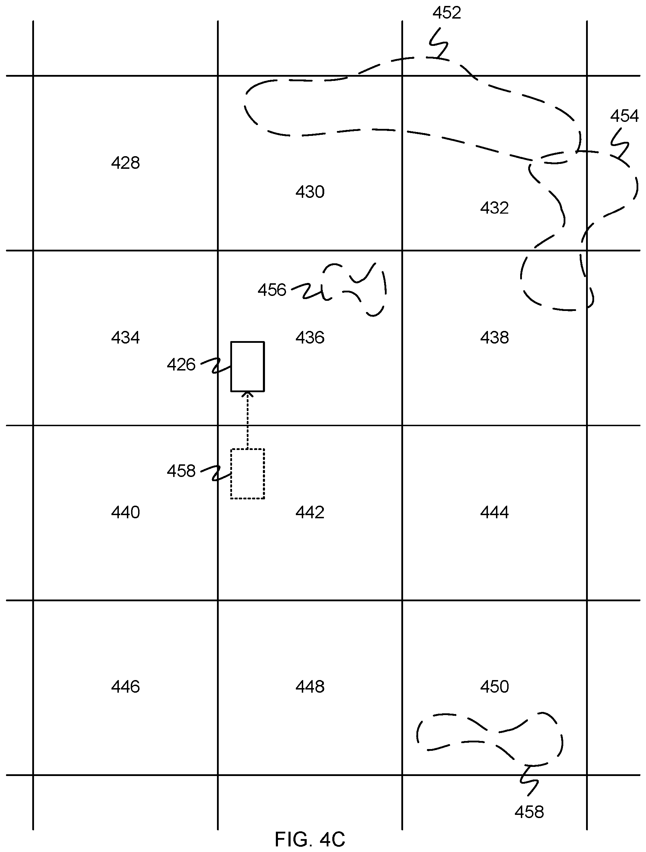

Figure 4C is a diagram illustrating an embodiment of a vehicle event recorder moving to a new geographic area. In the example shown, geographic area 428, geographic area 430, geographic area 432, geographic area 434, geographic area 436, geographic area 438, geographic area 440, geographic area 442, geographic area 444, geographic area 446, geographic area 448, and geographic area 450 comprise a grid of square location tiles. In some embodiments, geographic areas comprise location tiles of another regular shape (e.g., a hexagonal grid), areas of irregular shape and size, or any other appropriate areas. In some embodiments, geographic areas sharing a vertex are considered neighboring. For example, in the embodiment shown, geographic area 436 neighbors geographic area 428, geographic area 430, geographic area 432, geographic area 434, geographic area 438, geographic area 440, geographic area 442, and geographic area 444. In some embodiments, geographic areas sharing an edge are considered neighboring. Geofence 452, geofence 454, geofence 456, and geofence 458 comprise geofences of arbitrary shape and size. Geofence 452 and geofence 454 also overlap within geographic area 432. In some embodiments, a geofence is associated with geographic areas that contain at least a portion of the geofence. For example, in the embodiment shown, geofence 452 is associated with geographic area 430 and geographic area 432, geofence 454 is associated with geographic area 432 and geographic area 438, geofence 456 is associated with geographic area 436, and geofence 458 is associated with geographic area 450.

Vehicle event recorder 426 moves from location 458 in geographic area 442 to geographic area 436. The control architecture for vehicle event recorders determines a geofence state based at least in part on location data of a vehicle event recorder and geofence data associated with a geographic area where the location data indicates the vehicle event recorder is located. In some embodiments, the geofence state is not based on geofence 456 until vehicle event recorder 426 moves to geographic area 436.

In some embodiments, the control architecture for vehicle event recorders receives new geofence data from a server (e.g., server 300 of Figure 3) in response to the vehicle event recorder moving to a new geographic area. In some such embodiments, the new geofence data is associated with one or more geographic areas neighboring the new geographic area. For example, geofence 452 is associated with geographic area 430 and geographic area 432 and is received from the server in response to vehicle event recorder 426 moving to geographic area 436. In some embodiments, the control architecture for vehicle event recorders removes a portion of geofence data associated with a geographic area that is not neighboring the new geographic area. For example, geofence 458 is stored (e.g., in storage 206 of Figure 2) while vehicle event recorder 426 is in location 458 within geographic area 442. In response to vehicle event recorder 426 moving to geographic area 436 (an area that geographic area 450, associated with geofence 458, is not neighboring), geofence 458 is removed from storage.

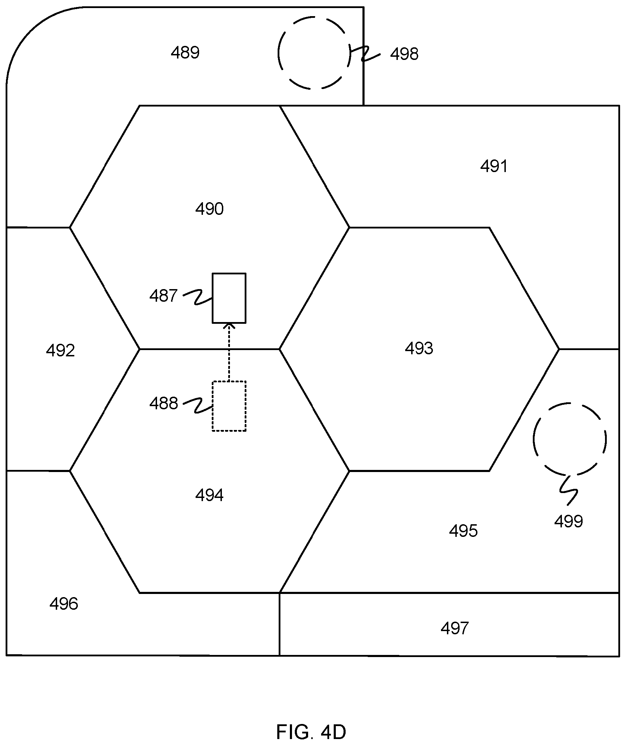

Figure 4D is a diagram illustrating an embodiment of a vehicle event recorder moving to a new geographic area. Vehicle event recorder 487 moves from location 488 in geographic area 494 to geographic area 490. Geographic area 490, geographic area 493, and geographic area 494 comprise hexagonal location tiles. Geographic area 489, geographic area 491, geographic area 492, geographic area 495, geographic area 496, and geographic area 497 comprise geographic areas of arbitrary shape and size. In the example shown, geographic areas sharing an edge are considered neighboring. In some embodiments, location tile 494 is neighboring geographic area 497. In various embodiments, geographic areas are regularly shaped, shaped the same, shaped in a variety of shapes, irregularly shaped, or any other combination of shapes and sizes.

In some embodiments, the control architecture for vehicle event recorders receives new geofence data from a server (e.g., server 300 of Figure 3) in response to the vehicle event recorder moving to a new geographic area. In some such embodiments, the new geofence data is associated with one or more geographic areas neighboring the new geographic area. For example, geofence 498 is associated with geographic area 489 and may be received from the server in response to vehicle event recorder 487 moving to geographic area 490. In some embodiments, the control architecture for vehicle event recorders removes a portion of geofence data associated with a geographic area that is not neighboring the new geographic area. For example, geofence 499 is stored (e.g., in storage 206 of Figure 2) while vehicle event recorder 487 is in location 488 within geographic area 494. In response to vehicle event recorder 487 moving to geographic area 490 (an area that geographic area 495, associated with geofence 499, is not neighboring), geofence 499 is removed from storage.

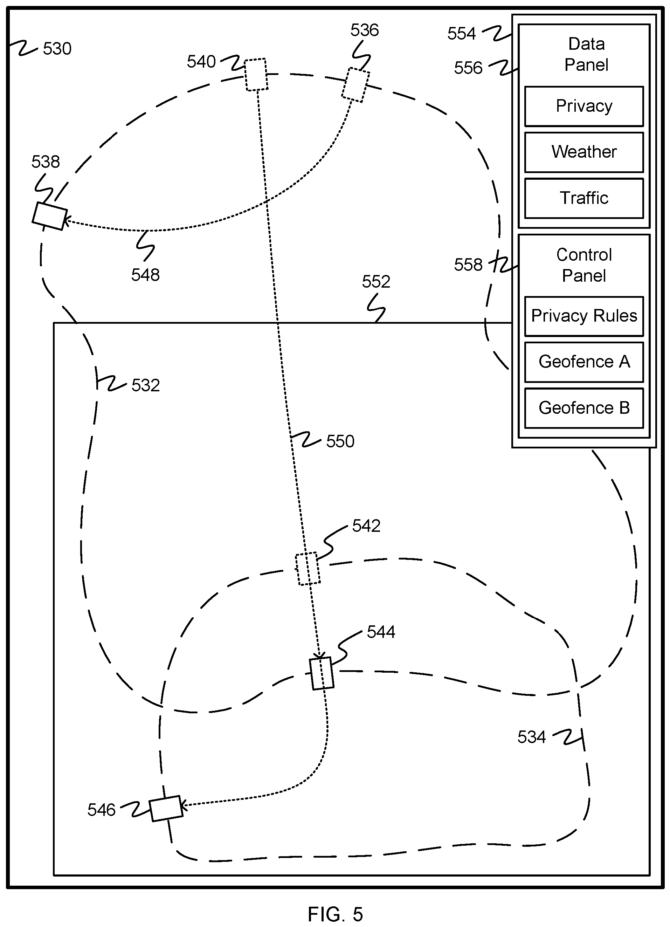

Figure 5 is a diagram illustrating an example of a graphical user interface displaying logged data associated with a geofence state. In the example shown, display 530 is a map displaying a set of features comprising geographic area 552, associated geofence 532, associated geofence 534, vehicle event recorder 538, path 548, geofence entry point 536, vehicle event recorder 546, path 550 of vehicle event recorder 546, geofence entry point 540, geofence entrance point 542, and geofence exit point 544 to a user (e.g., a driver, an administrator, etc.). In some embodiments, display 530 is generated by a display engine (e.g. display engine 320 of Figure 3). In some embodiments, display 530 is displayed in response to authenticating the user. In various embodiments, the user can request to view a subset of features associated with one or more geofence states, geofences, geographic areas, vehicle event recorders, or any other appropriate features. In the example shown, the set of features displayed on display 530 is associated with geographic area 552. In some embodiments, the set of features is based at least in part on the user (e.g., a driver may only be able to view features associated with a vehicle event recorder used by the driver, while an administrator may be able to view all features).

In the example shown, popup 554 comprises data panel 556 and control panel 558. In some embodiments, the user is able to request additional data based on the features displayed to the user. For example, in response to viewing display 530, the user may select a feature (e.g. vehicle event recorder 538) to view additional data associated with the feature (e.g., a geofence state, a privacy configuration, a timestamp associated with entering or exiting a geofence, etc.) in data panel 556 or in another display window (e.g., a floating pop up window near the feature - for example, a vehicle, a geofence, etc.). In some such embodiments, the user is able to request additional data that is not associated with the control architecture for vehicle event recorders (e.g., display 530 may show weather data in data panel 556 or display a geofence associated with a weather hazard in response to the user requesting weather data). In the example shown, privacy data, weather data, and traffic data are displayed in data panel 556. In various embodiments, the user can modify a geofence, a determination of a geofence state, a determination of a privacy configuration, a privacy rule, a modification of functionality, or any other appropriate data for one or more vehicle event recorders. For example, using control panel 558, the user is able to enable or disable a privacy rule associated with geofence 534. In the example shown, modification options for privacy rules and two geofences are displayed in control panel 558. In some such embodiments, the ability to modify the data is based on the type of user (e.g., an administrator may see control panel 558 while a driver may not).

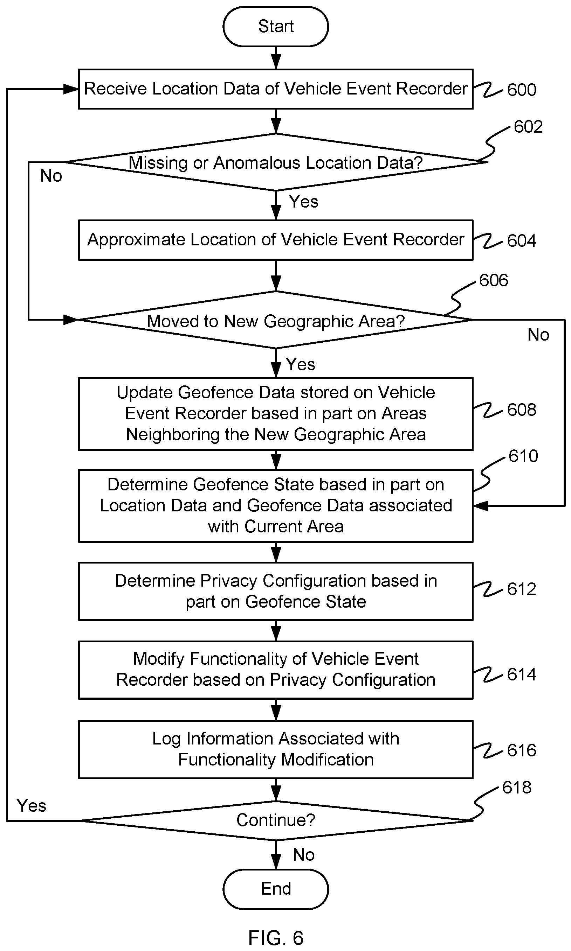

Figure 6 is a flow diagram illustrating an embodiment of a process for control of vehicle event recorders. In some embodiments, the process of Figure 6 is executed by a vehicle event recorder (e.g., vehicle event recorder 200 of Figure 2). In the example shown, in 600, location data of a vehicle event recorder is received (e.g., from a global positioning system on the vehicle event recorder or from a vehicle system). In 602, it is determined whether the location data contains missing or anomalous data. In various embodiments, data is determined to be anomalous in response to a location datapoint above a threshold distance from a previous location datapoint (e.g., the vehicle event recorder exceeds a threshold speed, acceleration, etc.), a location datapoint in a different direction from previous location datapoints, a location datapoint being recorded in an anomalous situation (e.g., a sensor recording the location data indicates that the data is anomalous - for example, the sensor recording is flagged as being in an anomalous state), or any other appropriate situation. In various embodiments, data is determined to be missing in response to a delay between location datapoints exceeding a threshold duration, a delay since a most recent location data point was received exceeding a threshold duration, an anomalous situation (e.g., a sensor malfunctions and reports empty data values), or any other appropriate situation. In response to the location data containing missing or anomalous data, control passes to 604. In response to the location data not containing missing or anomalous data, control passes to 606. In 604, the location of the vehicle event recorder is approximated. In some embodiments, approximating the location of the vehicle event recorder comprises projecting a path of the vehicle event recorder. For example, the most recent portion of the location data determined not to be missing or anomalous may indicate the vehicle is traveling at a particular speed and direction. In response, a path of the vehicle may be projected assuming that the speed and direction remain constant. In some embodiments, approximating the location of the vehicle event recorder comprises determining multiple potential locations of the vehicle event recorder. In some such embodiments, approximating the location comprises determining all locations the vehicle event recorder could feasibly reach. For example, the approximation may comprise an expanding circle within which the vehicle event recorder could be located, based on a maximum speed of the vehicle associated with the vehicle event recorder and centered on a most recent location datapoint. In some embodiments, approximating the location comprises determining locations the vehicle event recorder could reach using the road being traveled on and/or any subsequent branches for the road in the direction of travel (e.g., the set of farthest points reachable using the last know approximate speed along the set of all possible roads from the last known location).

In 606, it is determined whether the vehicle event recorder moved to a new geographic area. In some embodiments, the determination is based on the location data (e.g., the data received in 600, the approximation of 604, etc.). In response to the vehicle event recorder moving to a new geographic area, control passes to 608. In response to the vehicle event recorder not moving to a new geographic area, control passes to 610. In 608, geofence data stored on the vehicle event recorder is updated based at least in part on areas neighboring the new geographic area. In some embodiments, new geofence data is received from a server (e.g., via a transmission daemon on a vehicle event recorder, via a network interface on a vehicle event recorder, etc.). In some such embodiments, the new geofence data is associated with the areas neighboring the new geographic area. In some such embodiments, the new geographic area comprises multiple new areas (e.g., the potential locations of the vehicle event recorder approximated in 604 span multiple new areas) and the new geofence data is associated with areas neighboring one or more of the multiple new areas. In some embodiments, a portion of the geofence data is removed. In some such embodiments, the portion of the geofence data is associated with a geographic area that is not neighboring the new geographic area.

In 610, a geofence state is determined based at least in part on the location data and geofence data associated with the current geographic area. In some embodiments, the current geographic area comprises the new geographic area(s) determined in 606. In some embodiments, the geofence state is determined using a daemon or microservice (e.g., geofence processor daemon 212 of Figure 2). In various embodiments, the geofence state includes whether the vehicle event recorder is located inside or outside of a geofence in the geofence data, a location where the vehicle event recorder entered or exited the geofence, a last timestamp of when the vehicle event recorder was located inside the geofence, a location of the vehicle event recorder relative to the geofence, or any other appropriate data (e.g., the current time/date, a status of a driver of the vehicle associated with the vehicle event recorder, a status of the vehicle, a command from a vehicle data server, etc.). For example, the geofence state may indicate the vehicle event recorder is currently within a first geofence and provide a timestamp/datestamp and location of the vehicle event recorder entering the first geofence. The geofence state may also indicate the vehicle event recorder is outside a second geofence in the current geographic area and provide a timestamp/datestamp and location of the vehicle event recorder exiting the second geofence.

In 612, a privacy configuration is determined based at least in part on the geofence state. In some embodiments, the privacy configuration is determined using a daemon or microservice (e.g., privacy manager daemon 216 of Figure 2). In various embodiments, the privacy configuration is determined based on the current time, a status of a driver of the vehicle associated with the vehicle event recorder, a status of the vehicle, a command from a vehicle data server, or any other appropriate data. In some embodiments, the privacy configuration comprises a set of one or more privacy rules associated with the geofence data. In some such embodiments, a privacy rule of the set of one or more privacy rules associates the geofence state with a modification to the functionality of the vehicle event recorder. For example, a first privacy rule associates states in which the vehicle event recorder is within a first geofence with disabling a machine learning model for determining driver distractedness. As another example, a second privacy rule associates states in which the vehicle event recorder is within a second geofence with disabling an experimental machine learning model undergoing testing. In various embodiments, determining the privacy configuration comprises applying a most restrictive combination of applicable privacy rules, a least restrictive combination of applicable privacy rules, or any other appropriate combination of privacy rules (e.g., a rule associated with a smallest geofence). For example, in the event that the vehicle event recorder is within both the first and second geofences, applying a most restrictive combination of applicable privacy rules would disable both the machine learning model for driver distractedness and the experimental machine learning model.

In 614, the functionality of the vehicle event recorder is modified based on the privacy configuration. In some embodiments, the functionality of the vehicle event recorder is modified using a daemon or microservice (e.g., privacy manager daemon 216 of Figure 2). In various embodiments, modifying the functionality of the vehicle event recorder comprises restricting recording of vehicle event recorder data, restricting analysis of vehicle event recorder data, restricting storage of vehicle event recorder data, restricting transmission of vehicle event recorder data, or any other appropriate restriction. In various embodiments, the vehicle event recorder data comprises video data from inside the vehicle associated with the vehicle event recorder, audio data from inside the vehicle, video data from outside the vehicle, audio data from outside the vehicle, location data, or any other appropriate data. In some embodiments, modifications to the functionality of the vehicle event recorder differ between types of data.

In some embodiments, modifying the functionality comprises disabling a machine learning model (e.g., a model running on machine learning engine 220 of Figure 2). In various such embodiments, the machine learning model comprises an algorithm for determining driver distractedness, an experimental algorithm undergoing testing, an algorithm for processing data inside of a vehicle, or any other appropriate algorithm.

In 616, information associated with the functionality modification is logged. In various embodiments, the control architecture for vehicle event recorders further comprises logging the geofence state, logging the location data, logging timestamps and/or datestamps associated with the location data, logging the privacy configuration, logging the modifications to the functionality of the vehicle event recorder, or logging any other appropriate data. The logged data may be transmitted to a server, stored on the vehicle event recorder, or processed in any other appropriate manner. In some embodiments, the modifications to the functionality of the vehicle event recorder include modifications to the data or types of data logged.

In some embodiments, the logged data is displayed for a user (e.g., overlayed on a map, illustrated on a graphical user interface, etc.). The user is able to view the logged data on the display. In various embodiments, the user is able to view the geographic area used to determine the geofence state, a geofence included in or associated with the geofence state, location data of the vehicle event recorder, a location and/or time/date the vehicle event recorder entered the geofence, a location and/or time/date the vehicle event recorder exited the geofence, the privacy configuration (e.g. a privacy rule associated with the geofence), and/or any other appropriate data.

In 618, it is determined whether the process for control of vehicle event recorders should continue. For example, in response to turning off the vehicle associated with the vehicle event recorder, the process may be determined not to continue. In response to the process continuing, control passes to 600. In response to the process not continuing, the process of Figure 6 is terminated.

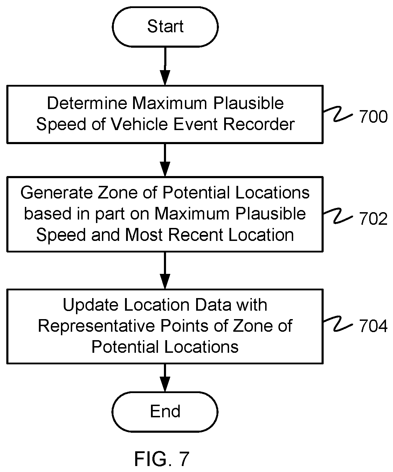

Figure 7 is a flow diagram illustrating an embodiment of a process for approximating the location of a vehicle event recorder. In some embodiments, the process of Figure 7 implements 604 of Figure 6. In the example shown, in 700, the maximum plausible speed of the vehicle event recorder is determined. In various embodiments, this determination is based on vehicle data associated with the vehicle event recorder (e.g., a maximum speed of the associated vehicle), stored data of the vehicle event recorder (e.g., a maximum historical speed of the vehicle event recorder, a most recently recorded speed of the vehicle event recorder, etc.), speed limit data associated with a most recent location in which the vehicle event recorder was located, or any other appropriate data. In 702, a zone of potential locations is generated based in part on the maximum plausible speed and the most recent location in which the vehicle event recorder was located. In various embodiments, the zone comprises an expanding circular area from the most recent location, branching pathways from the most recent location along known roads, pathways from the most recent location based on the most recent direction the vehicle event recorder was moving, or any other appropriate zone shape or size. For example, the zone comprises a circular area centered on the most recent location, the radius of the area corresponding to the maximum plausible speed multiplied by the elapsed time since the most recent location was determined. As another example, a perimeter defined by a set of points determined using the speed of travel and the direction of travel along a road and subsequent possible roads in the direction of travel (e.g., choosing all possible branching of roads in the direction of travel and then using the speed to determine farthest point reachable). In some embodiments, the privacy state is determined by using the most conservative privacy state within the privacy zone. In 704, the location data is updated with representative points of the zone of potential locations. In some embodiments, the representative points comprise the entire zone of potential locations. In some embodiments, the representative points comprise a furthest portion of the zone of potential locations from the most recent location. In some such embodiments, the furthest portion comprises a single point. In some embodiments, the updated portion of the location data is indicated to have been approximated (e.g., with a metadata flag). In some embodiments, timestamps and/or datestamps are associated with the location data.

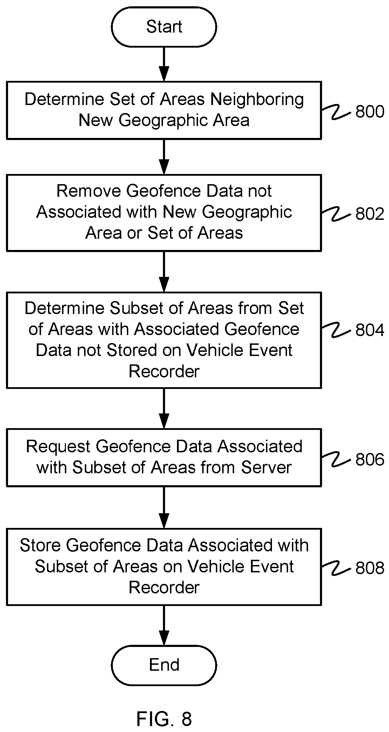

Figure 8 is a flow diagram illustrating an embodiment of a process for updating geofence data stored on a vehicle event recorder in response to the vehicle event recorder moving to a new geographic area. In some embodiments, Figure 8 implements 608 of Figure 6. In the example shown, in 800, a set of areas neighboring the new geographic area is determined. In some embodiments, the new geographic area comprises multiple geographic areas, and the set of areas comprises areas neighboring one or more of the multiple geographic areas. In 802, geofence data not associated with the new geographic area or the set of areas is removed from the vehicle event recorder. For example, geofence data associated with a geographic area neighboring an old geographic area but not neighboring the new geographic area are removed (e.g., from a storage 206 of Figure 2). In some embodiments, the vehicle event recorder has limited storage (e.g., compared to vehicle data server 108 of Figure 1) and removing the geofence data not associated with the new geographic area increases available storage. In 804, a subset of areas from the set of areas with associated geofence data not stored on the vehicle event recorder is determined. For example, areas neighboring the new geographic area but not neighboring an old geographic area are associated with geofence data that is not stored on the vehicle event recorder. In 806, the geofence data associated the subset of areas is requested from a server (e.g., vehicle data server 300 of Figure 3). In 808, the geofence data associated with the subset of areas is stored on the vehicle event recorder.

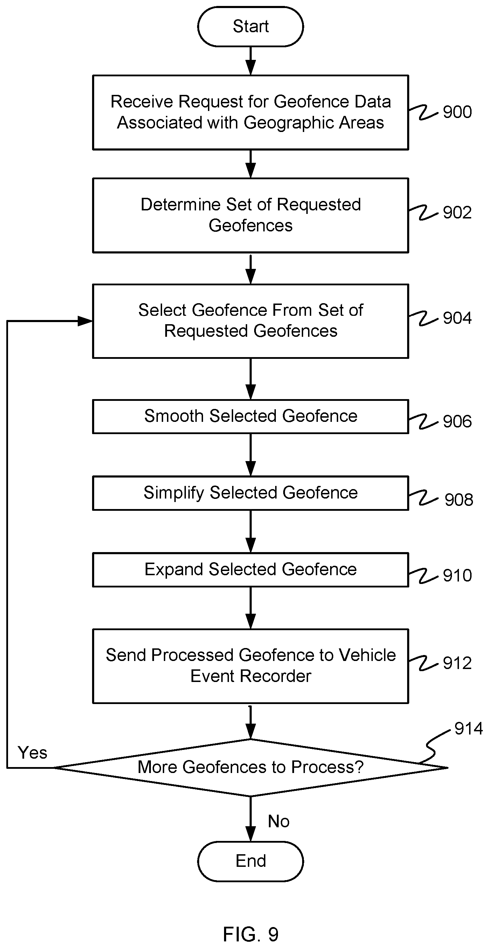

Figure 9 is a flow diagram illustrating an embodiment of a process for sending geofence data to a vehicle event recorder. In some embodiments, the process of Figure 9 is executed by a server (e.g., vehicle data server 300 of Figure 3). In the example show, in 900, a request for geofence data associated with one or more geographic areas is received. In some embodiments, the one or more geographic areas comprise the subset of areas determined in 804 of Figure 8. In 902, a set of requested geofences is determined. In various embodiments, the set of requested geofences is included in the request, determined to be the set of all geofences associated with the one or more geographic areas, or determined to be any other appropriate set of geofences. In 904, a geofence is selected from the set of requested geofences. In 906, the selected geofence is smoothed. In some embodiments, the geofence is smoothed via a daemon or microservice (e.g., geofence smoothing microservice 306 of Figure 3). In some embodiments, smoothing the geofence improves ease of analysis of the geofence. In 908, the selected geofence is simplified. In some embodiments, the geofence is simplified via a daemon or microservice (e.g., geofence simplification microservice 308 of Figure 3). In some embodiments, simplifying the geofence improves ease of analysis of the geofence. In 910, the selected geofence is expanded. In some embodiments, the geofence is expanded via a daemon or microservice (e.g., geofence expansion microservice 310 of Figure 3). In some embodiments, expanding the geofence improves ease of analysis of the geofence or storage of the geofence data. In 912, the processed geofence is sent to the vehicle event recorder. In 914, it is determined whether there are more geofences to process from the set of requested geofences. In response to there being more geofences to process, control passes to 904. In response to there being no more geofences to process, the process of Figure 9 terminates.

In some embodiments, the processed geofence is stored (e.g., in storage 318 of Figure 3). In some such embodiments, in response to the selected geofence being a processed geofence existing in storage (e.g., from a previous iteration of the process of Figure 9), the processed geofence is retrieved from storage and sent to the vehicle event recorder.

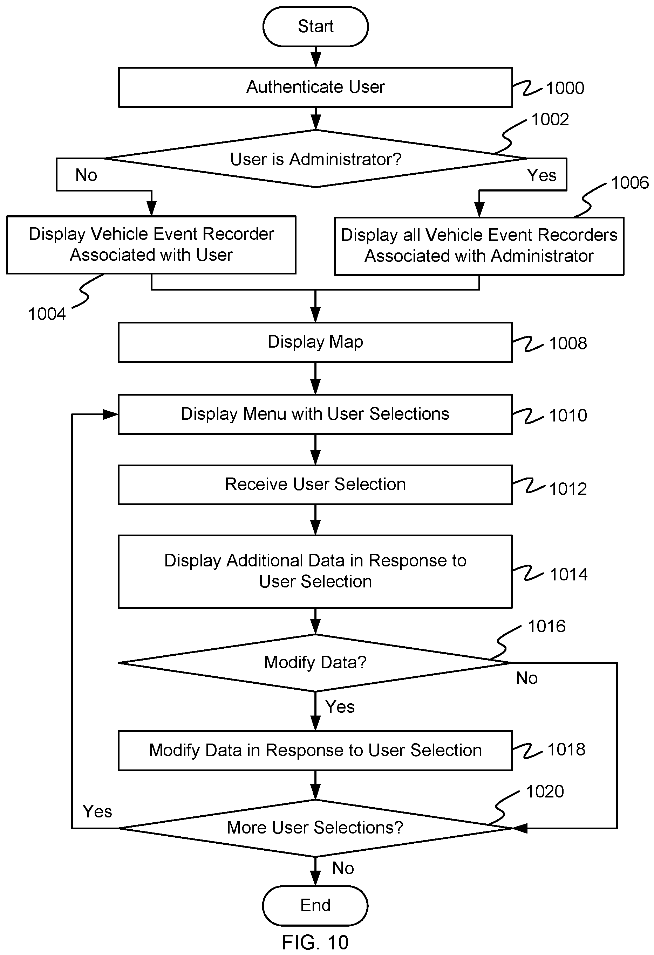

Figure 10 is a flow diagram illustrating an embodiment of a process for displaying data of a control architecture for vehicle event recorders. In some embodiments, the process of Figure 10 is executed by a vehicle data server (e.g., vehicle data server 300 of Figure 3). In the example shown, in 1000, a user is authenticated. In various embodiments, the user is prompted for user credentials (e.g., on a graphical user interface), assigned a certificate or token, prompted for biometric identification, or authenticated using any other appropriate method. In 1002, it is determined whether the user is an administrator. In the example shown, administrators have permission to view and manipulate data associated with all vehicle event recorders and non-administrators have permission to view an associated vehicle event recorder. In various embodiments, users are assigned any appropriate types (e.g., user, supervisor, admin, superuser, etc.) and given any appropriate permissions. In some such embodiments, permissions are assigned per user. In response to the user being an administrator, control passes to 1006. In response to the user not being an administrator, control passes to 1004. In 1004, a vehicle event recorder associated with the user is displayed. For example, in the event that the user is a driver of a vehicle, the vehicle event recorder associated with the vehicle may be displayed. In some embodiments, more than one vehicle event recorder may be displayed. In 1006, all vehicle event recorders associated with the administrator are displayed. For example, in the event that the administrator is associated with a fleet of vehicles, all the vehicle event recorders associated with the fleet of vehicles may be displayed. In 1008, a map is displayed (e.g., the map of Figure 5B). In various embodiments, the map comprises a graphical user interface, logged data, geofence data, vehicle event recorder data, or any other appropriate features. In 1010, a menu with user selections is displayed. In various embodiments, the user selections are displayed via toggles, sliders, input fields, or any other appropriate user input method. In various embodiments, the user selections comprise viewing geofence data, viewing vehicle event recorder data, viewing geofence state data, viewing privacy configuration data, viewing functionality modifications, viewing logged data, viewing traffic data, viewing weather data, viewing route risk data, viewing road condition data, modifying privacy configuration data, modifying functionality modifications, modifying weather data, modifying road condition data, modifying the map (e.g., viewing a different geographic area), modifying the menu (e.g., viewing additional user selections), or any other appropriate user selection. In some embodiments, the user selections displayed on the menu are based on the permissions associated with the user (e.g., a non-administrator may not be able to modify privacy configuration data). In 1012, a user selection is received.

In 1014, additional data is displayed in response to the user selection. In various embodiments, the additional data is displayed as a popup, a map overlay, or any other appropriate method. In some such embodiments, the method of displaying the additional data is based on the user selection. For example, in response to the user selection being a request to view a geofence state of a vehicle event recorder, a popup (e.g. popup 554 of Figure 5B) is displayed containing a data panel displaying the geofence state. In response to the user selection being a request to view weather data, a geofence associated with anomalous weather (e.g., heavy rain) is displayed. In response to the user selection being a request to view traffic data, an overlay of traffic conditions is displayed near each road on the map. In some embodiments, the additional data comprises metadata associated with the user selection (e.g., a confirmation message for a modification of functionality of a vehicle event recorder and additional user selections to accept or decline).

In 1016, it is determined whether to modify data based on the user selection. For example, a user selection requesting to view weather data does not require modification to the weather data. In response to the data needing to be modified, control passes to 1018. In response to the data not needing to be modified, control passes to 1020. In 1018, data is modified in response to the user selection. In various embodiments, the additional data is modified via a popup, a map overlay, or any other appropriate method. In some such embodiments, the method of modifying the additional data is based on the user selection. For example, in response to the user selection being a request to modify a privacy configuration of a vehicle event recorder, a popup (e.g. popup 554 of Figure 5B) is displayed containing a control panel displaying the privacy configuration and additional user selections (e.g., disabling a geofence, disabling a privacy rule, etc.). In 1020, it is determined whether there are more user selections to process. In some embodiments, the more user selections become available in response to the user selection received in 1012. In response to there being more user selections, control passes to 1010. In response to there being no more user selections, the process of Figure 10 terminates.

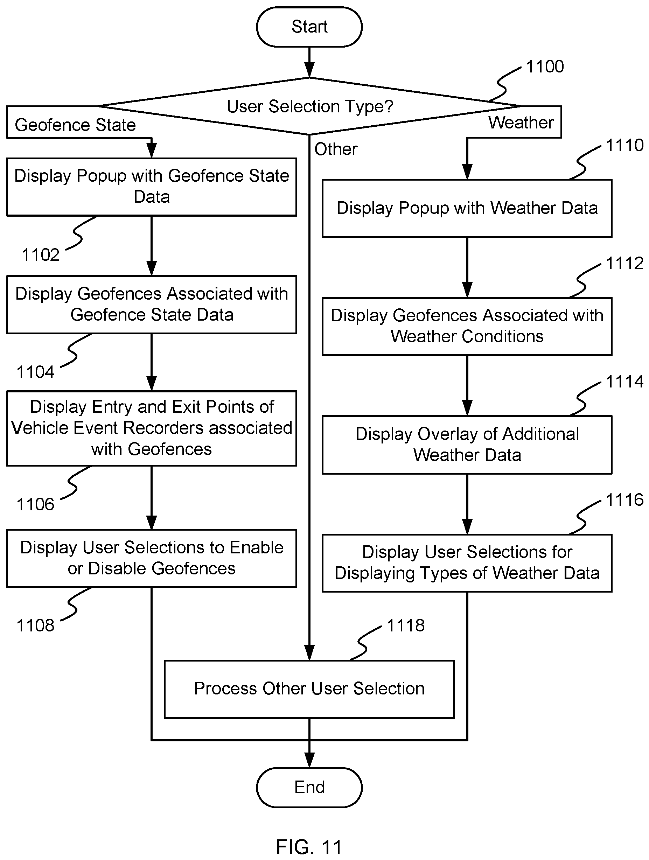

Figure 11 is a flow diagram illustrating an embodiment of a process for displaying additional data in response to a user selection. In some embodiments, the process of Figure 11 implements 1014 of Figure 10. In the example shown, in 1100, the type of user selection is determined. In response to the user selection type being associated with a geofence state, control passes to 1102. In response to the user selection type being associated with weather, control passes to 1110. In response to the user selection being another type, control passes to 1118. In 1102, a popup with geofence state data is displayed. In various embodiments, the geofence state data is associated with one or more vehicle event recorders (e.g., a fleet of vehicle event recorders associated with a user). In some embodiments, the geofence state is based on the user selection (e.g., a user selected a vehicle event recorder from a fleet of vehicle event recorders and requested geofence state data associated with the vehicle event recorder). In 1104, geofences associated with the geofence state data are displayed. In some embodiments, the geofences comprise all geofences used to determine the geofence state data (e.g., geofence data associated with a geographic area in which a vehicle event recorder is located). In various embodiments, the geofences are overlayed on a map, illustrated on a graphical user interface, or displayed using any other appropriate method. In 1106, entry and exit points of vehicle event recorders associated with the geofences are displayed. In some embodiments, the vehicle event recorders comprise a set of one or more vehicle event recorders associated with the geofence state data. For example, in response to a user selecting a vehicle event recorder from a fleet of vehicle event recorders, entry and exit points corresponding to locations where the vehicle event recorder entered or exited the geofences are displayed. In various embodiments, the entry and exit points are overlayed on a map, illustrated on a graphical user interface, or displayed using any other appropriate method. In 1108, user selections to enable or disable geofences are displayed. In various embodiments, the user selections comprise modifications to the determination of the geofence state, modifications to displayed data, or any other appropriate user selections. In various embodiments, the user selections are displayed via toggles, sliders, input fields, or any other appropriate user input method.

In 1110, a popup with weather data is displayed. In various embodiments, the weather data comprises weather condition data, weather warning data, weather forecast data, radar data, temperature data, wind speed data, or any other appropriate data. In 1112, geofences associated with weather conditions are displayed. For example, a geofence corresponding to a storm may be overlayed on a map. In various embodiments, the geofences are overlayed on a map, illustrated on a graphical user interface, or displayed using any other appropriate method. In 1114, an overlay of additional weather data is displayed. In various embodiments, the overlay comprises temperature data, wind speed data, weather forecast data, weather condition data, weather warning data, or any other appropriate data. For example, the wind speed at a location of a vehicle event recorder may be overlayed on the map at the location. In 1116, user selections for displaying types of weather data are displayed. In various embodiments, the user selections comprise making various types of weather data (e.g., temperature, wind speed, etc.) visible or invisible, requesting a forecast of weather conditions a selected time into the future, or any other appropriate user selections. In various embodiments, the user selections are displayed via toggles, sliders, input fields, or any other appropriate user input method.

In 1118, other user selection types are processed. In various embodiments, the user selections comprise viewing geofence data, viewing vehicle event recorder data, viewing geofence state data, viewing privacy configuration data, viewing functionality modifications, viewing logged data, viewing traffic data, viewing weather data, viewing route risk data, viewing road condition data, modifying privacy configuration data, modifying functionality modifications, modifying weather data, modifying road condition data, modifying the map (e.g., viewing a different geographic area), modifying the menu (e.g., viewing additional user selections), or any other appropriate user selection.

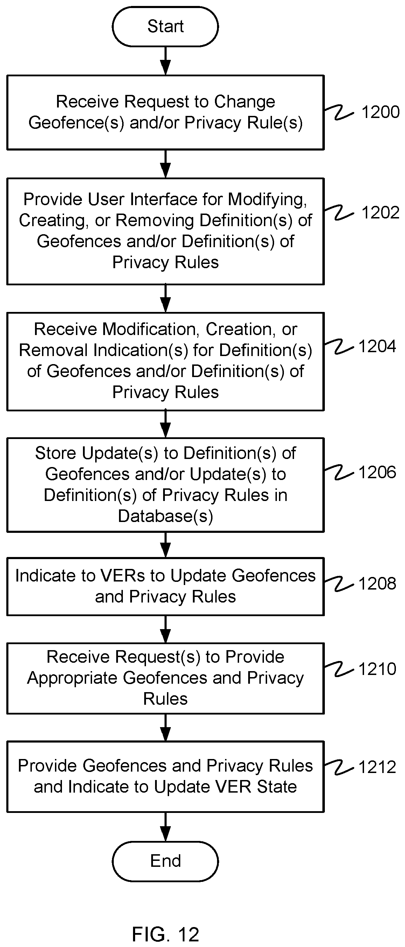

Figure 12 is a flow diagram illustrating an embodiment of a process for updating geofences and/or privacy rules. In some embodiments, the process of Figure 12 is executed on a vehicle data server (e.g., vehicle data server 108 of Figure 1). In some embodiments, updating geofences and privacy rules on a VER is in response to a user action on a user interface modifying either geofence definitions and/or associated privacy rules. In the example shown, in 1200 a request is received to change geofence(s) and/or privacy rule(s). For example, a user accesses a vehicle data server to update geofence(s) and/or privacy rule(s). In 1202, a user interface is provided for modifying, creating, or removing definition(s) of geofences and/or definition(s) of privacy rules. For example, a user interface is provided to a user system to input/modify/delete geofences (e.g., using a graphical user interface to draw new boundaries, modify boundaries, or remove boundaries of a geofence on a map) and/or to input/modify/delete privacy rules (e.g., using text input windows or pulldown menus to indicate new privacy rules/settings). In 1204, the modification, creation, or removal indication(s) for definition(s) of geofences and/or definition(s) of privacy rules is/are received. In 1206, update(s) to definition(s) of geofences and/or update(s) to definition(s) of privacy rules is/are stored in database(s). For example, one or more updates to definition(s) of geofences and/or privacy rules are stored in database(s) (e.g., a single database for both geofences and privacy rules or a database for geofences and another database for privacy rules). In 1208, an update to geofences and privacy rules is indicated to VERs. For example, the vehicle data server indicates to vehicle event recorders on vehicles that the geofences and privacy rules have been updated. In 1210, one or more requests are received to provide appropriate geofences and privacy rules. For example, a given vehicle event recorder will request updates to geofence data and/or privacy rules if appropriate for the location of the vehicle event recorder (e.g., the geofence and privacy rule data that is currently loaded in the vehicle event recorder my require updating based on the updated geofence data and privacy rule data that has been stored after the update). In 1212, geofences and privacy rules and an indication to update a VER state are provided. For example, in response to the received request for the appropriate geofences and privacy rules, the geofences and privacy rules are provided to the VER and also an indication to update VER state is also provided (e.g., if the vehicle with the VER is currently in a geofence or new is in a geofence and/or the privacy rule is changed, the state of the VER is then updated to match the changes to the geofence and/or the privacy rule, and the VER acts based on the new state).

Although the foregoing embodiments have been described in some detail for purposes of clarity of understanding, the invention is not limited to the details provided. There are many alternative ways of implementing the invention. The disclosed embodiments are illustrative and not restrictive.

Yet further aspects and embodiments of the invention are enumerated with reference to the following numbered clauses.
1. A system, comprising:
   an interface configured to:
      receive location data of a vehicle event recorder; and
   a processor configured to:
      determine a geofence state based at least in part on the location data and geofence data associated with a geographic area in which the location data indicates the vehicle event recorder is located;
      determine a privacy configuration based at least in part on the geofence state; and
      modify functionality of the vehicle event recorder based at least in part on the privacy configuration.
2. The system of clause 1, wherein the geographic area comprises a location tile.
3. The system of clause 1, wherein modifying the functionality of the vehicle event recorder comprises disabling a machine learning model.
4. The system of clause 3, wherein the machine learning model comprises one or more of the following: an algorithm for determining driver distractedness, an experimental algorithm undergoing testing, or an algorithm for processing data collected inside of a vehicle.
5. The system of clause 1, wherein the geofence state is determined using a geofence daemon or microservice.
6. The system of clause 1, wherein the privacy configuration is determined using a privacy daemon or microservice.
7. The system of clause 1, wherein receiving the location data further comprises approximating the location of the vehicle event recorder in the event of missing or anomalous data.
8. The system of clause 7, wherein the anomalous data are determined based at least in part on one or more of the following: a datapoint being determined to be farther than a proximity threshold distance from a previous datapoint, a datapoint being determined to be in a different direction from a previous direction, or a datapoint being determined to be recorded in an anomalous situation.
9. The system of clause 1, further comprising receiving new geofence data from a server in response to the vehicle event recorder moving to a new geographic area.
10. The system of clause 9, wherein the new geofence data is associated with one or more geographic areas neighboring the new geographic area.
11. The system of clause 9, further comprising removing a portion of geofence data associated with a geographic area that is not neighboring the new geographic area.
12. The system of clause 1, wherein the geofence data is smoothed, simplified, or expanded.
13. The system of clause 1, wherein the geofence data is associated with a period of time.
14. The system of clause 1, wherein the privacy configuration comprises a set of one or more privacy rules associated with the geofence data.
15. The system of clause 14, wherein a privacy rule of the set of one or more privacy rules is associated with a period of time.
16. The system of clause 14, wherein a privacy rule of the set of one or more privacy rules associates the geofence state with a modification to the functionality of the vehicle event recorder.
17. The system of clause 14, wherein determining the privacy configuration comprises applying one or more of the following: a most restrictive combination of applicable privacy rules or a least restrictive combination of applicable privacy rules.
18. The system of clause 1, wherein modifying the functionality of the vehicle event recorder comprises restricting one or more of the following uses of the vehicle event recorder: recording of vehicle event recorder data, analysis of vehicle event recorder data, storage of vehicle event recorder data, or transmission of vehicle event recorder data.
19. The system of clause 18, wherein restricting the analysis of vehicle event recorder data comprises restricting the application of one or more algorithms on the vehicle event recorder data.
20. The system of clause 18, wherein the vehicle event recorder data includes one or more of the following types of data: video data from inside a vehicle associated with the vehicle event recorder, audio data from inside the vehicle, video data from outside the vehicle, audio data from outside the vehicle, vehicle sensor data, vehicle event recorder sensor data, and/or location data.
21. The system of clause 1, further comprising logging one or more of: the geofence state, the location data, timestamps associated with the location data, the privacy configuration, or modifications to the functionality of the vehicle event recorder.
22. A method, comprising:
   receiving location data of a vehicle event recorder; and
   determining, using a processor, a geofence state based at least in part on the location data and geofence data associated with a geographic area in which the location data indicates the vehicle event recorder is located;
   determining a privacy configuration based at least in part on the geofence state; and
   modifying functionality of the vehicle event recorder based at least in part on the privacy configuration.
23. A computer program product embodied in a non-transitory computer readable medium and comprising computer instructions for:
   receiving location data of a vehicle event recorder; and
   determining, using a processor, a geofence state based at least in part on the location data and geofence data associated with a geographic area in which the location data indicates the vehicle event recorder is located;
   determining a privacy configuration based at least in part on the geofence state; and
   modifying functionality of the vehicle event recorder based at least in part on the privacy configuration.

## Claims

1. A system, comprising:
an interface configured to:
receive location data of a vehicle event recorder; and
a processor configured to:
determine a geofence state based at least in part on the location data and geofence data associated with a geographic area in which the location data indicates the vehicle event recorder is located;
determine a privacy configuration based at least in part on the geofence state; and
modify functionality of the vehicle event recorder based at least in part on the privacy configuration.

2. The system of claim 1, wherein the geographic area comprises a location tile.

3. The system of claim 1, wherein modifying the functionality of the vehicle event recorder comprises disabling a machine learning model.

4. The system of claim 3, wherein the machine learning model comprises one or more of the following: an algorithm for determining driver distractedness, an experimental algorithm undergoing testing, or an algorithm for processing data collected inside of a vehicle.

5. The system of claim 1, wherein the geofence state is determined using a geofence daemon or microservice.

6. The system of claim 1, wherein the privacy configuration is determined using a privacy daemon or microservice.

7. The system of claim 1, wherein receiving the location data further comprises approximating the location of the vehicle event recorder in the event of missing or anomalous data.

8. The system of claim 7, wherein the anomalous data are determined based at least in part on one or more of the following: a datapoint being determined to be farther than a proximity threshold distance from a previous datapoint, a datapoint being determined to be in a different direction from a previous direction, or a datapoint being determined to be recorded in an anomalous situation.

9. The system of claim 1, further comprising receiving new geofence data from a server in response to the vehicle event recorder moving to a new geographic area;
optionally:
(a) wherein the new geofence data is associated with one or more geographic areas neighboring the new geographic area;
or
(b) further comprising removing a portion of geofence data associated with a geographic area that is not neighboring the new geographic area.

10. The system of claim 1, wherein the geofence data is:
(a) smoothed, simplified, or expanded;
or
(b) wherein the geofence data is associated with a period of time.

11. The system of claim 1, wherein the privacy configuration comprises a set of one or more privacy rules associated with the geofence data;
optionally:
(a) wherein a privacy rule of the set of one or more privacy rules is associated with a period of time;
or
(b) wherein a privacy rule of the set of one or more privacy rules associates the geofence state with a modification to the functionality of the vehicle event recorder;
or
(c) wherein determining the privacy configuration comprises applying one or more of the following: a most restrictive combination of applicable privacy rules or a least restrictive combination of applicable privacy rules.

12. The system of claim 1, wherein modifying the functionality of the vehicle event recorder comprises restricting one or more of the following uses of the vehicle event recorder: recording of vehicle event recorder data, analysis of vehicle event recorder data, storage of vehicle event recorder data, or transmission of vehicle event recorder data;
optionally:
(a) wherein restricting the analysis of vehicle event recorder data comprises restricting the application of one or more algorithms on the vehicle event recorder data;
or
(b) wherein the vehicle event recorder data includes one or more of the following types of data: video data from inside a vehicle associated with the vehicle event recorder, audio data from inside the vehicle, video data from outside the vehicle, audio data from outside the vehicle, vehicle sensor data, vehicle event recorder sensor data, and/or location data.

13. The system of claim 1, further comprising logging one or more of: the geofence state, the location data, timestamps associated with the location data, the privacy configuration, or modifications to the functionality of the vehicle event recorder.

14. A method, comprising:
receiving location data of a vehicle event recorder; and
determining, using a processor, a geofence state based at least in part on the location data and geofence data associated with a geographic area in which the location data indicates the vehicle event recorder is located;
determining a privacy configuration based at least in part on the geofence state; and
modifying functionality of the vehicle event recorder based at least in part on the privacy configuration.

15. A computer program product embodied in a non-transitory computer readable medium and comprising computer instructions for:
receiving location data of a vehicle event recorder; and
determining, using a processor, a geofence state based at least in part on the location data and geofence data associated with a geographic area in which the location data indicates the vehicle event recorder is located;
determining a privacy configuration based at least in part on the geofence state; and
modifying functionality of the vehicle event recorder based at least in part on the privacy configuration.
